# EUROPEAN PATENT APPLICATION

(11) **EP 0 524 449 A1**
(43) Date of publication of application: **27.01.1993**
(21) Application number: 92110849.4
(22) Date of filing: 26.06.1992
(51) Int. Cl.: G11B 11/10

(54) **Magneto-optical recording medium**

(30) Priority: 27.06.1991 JP 181583/91
(71) Applicant: TOSOH CORPORATION, Yamaguchi-ken 746 (JP)
(72) Inventor: Shibutami, Tetsuo, Yonezawa-shi, Yamagata (JP); Iigusa, Hitoshi, Kawasaki-shi, Kanagawa (JP); Misaki, Hidehiko, Ebina-shi, Kanagawa (JP)
(74) Representative: Bühling, Gerhard, Dipl.-Chem.

(57) **Abstract**

A magneto-optical recording medium is disclosed, comprising a substrate having thereon a magneto-optical recording layer, the substrate being a polycarbonate substrate having a surface etched with a gas containing ammonia gas. The magneto-optical recording medium exhibits high reliability on long-term use, suffering substantially no change in reflectance with time.

## Description

### FIELD OF THE INVENTION

This invention relates to a magneto-optical recording medium capable of recording and reproducing information by using a laser beam as a light source.

### BACKGROUND OF THE INVENTION

Magneto-optical recording media have recently attracted attention because of their high-density recording performance and have been subjected to research and development.

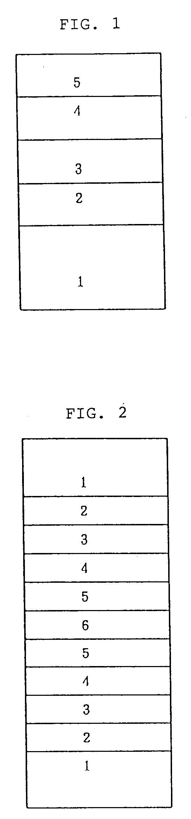

Research and development have particularly been directed to magneto-optical recording media having the structure shown in Fig. 1 which is composed of polycarbonate substrate 1, magneto-optical recording layer 3 sandwiched, if desired, between transparent protective layers 2 and 4 made of, e.g., silicon nitride, aluminum nitride, silicon oxide, aluminum oxide, or zinc sulfide, and reflective layer 5 made of, e.g., aluminum or an aluminum alloy, in this order; and both-sided magneto-optical recording media having the structure shown in Fig. 2 which is composed a pair of the above-described media bonded together via adhesive layer 6.

These magneto-optical recording media are generally produced by forming a magneto-optical recording layer or a protective layer by sputtering or vapor deposition on a polycarbonate substrate having a surface etched with argon gas.

However, the magneto-optical recording media using a polycarbonate substrate undergoes changes in reflectance or magnetic characteristics with time and therefore have poor reliability in long-term use.

### SUMMARY OF THE INVENTION

An object of the present invention is to provide a highly reliable magneto-optical recording medium which is free from changes in reflectance or magnetic characteristics even on long-term use.

As a result of extensive investigations on a polycarbonate substrate, the inventors have found that a polycarbonate substrate having a surface etched with a gas containing a nitrogen element provides a highly reliable magneto-optical recording medium and thus completed the present invention.

The present invention relates to a magneto-optical recording medium comprising a substrate having thereon a magneto-optical recording layer, the substrate being a polycarbonate substrate having a surface etched with a gas containing ammonia gas.

### BRIEF DESCRIPTION OF THE ACCOMPANYING DRAWINGS

Figure 1 illustrates one embodiment of the magneto-optical recording medium according to the present invention.

Figure 2 illustrates another embodiment of the magneto-optical recording medium according to the present invention.

Figure 3 depicts changes of reflectance with time of the magneto-optical recording media obtained in the Example and Comparative Example.

### DETAILED DESCRIPTION OF THE INVENTION

The magneto-optical recording medium of the present invention is not particularly restricted in structure as long as a polycarbonate sheet having its surface etched with ammonia gas is used as a substrate on which a magneto-optical recording layer is formed. For example, the recording medium may have the conventional structure shown in Figs. 1 or 2.

By using a polycarbonate substrate having its surface etched with a gas containing ammonia gas, there is obtained a highly reliable recording medium which suffers no change in reflectance or magnetic characteristics upon long-term use. While the reason therefor is not necessarily clear, it is believed that some surface modification of a polycarbonate substrate by the etching may bring about such effects.

Conditions for the surface etching of a polycarbonate substrate are not particularly limited. In particular, ammonia gas alone or a mixed gas of ammonia gas with an inert gas, e.g., argon, produces significant effects.

The concentration of the gas containing ammonia gas in the etching gas is not critical but is preferably at least 5% by volume for obtaining sufficient etching effects.

While a higher etching power or a longer etching time may produce greater etching effects, an excessive etching power or an excessive etching time likely inflicts damages on a polycarbonate substrate. Accordingly, the etching is usually carried out with an etching power ranging from 200 W to 3 kW for an etching time ranging from 0.5 to 10 minutes at a substrate temperature which does not cause softening of the substrate, usually 80°C or lower.

The present invention is now illustrated in greater detail by way of the following examples, but it should be understood that the present invention is not construed as being limited thereto.

### EXAMPLE

The surface of 5.25 inch-diameter polycarbonate substrate 1 was etched with a mixed gas of argon and ammonia gas having an ammonia gas concentration of 10% by volume at an etching power of 200 W for 5 minutes.

On the thus etched surface of the polycarbonate substrate 1 were formed by sputtering 1000 Å-thick transparent protective layer 2 comprising silicon nitride, 300 Å-thick magneto-optical recording layer 3 comprising a TbFeCo alloy, 300 Å-thick transparent protective layer 4 comprising silicon nitride, and 400 Å-thick reflective layer 5 comprising aluminum in this order.

A pair of the resulting laminates were bonded together via a hot-melt resin with the respective reflective layers facing to each other to obtain a magneto-optical recording medium having the structure of Fig. 2.

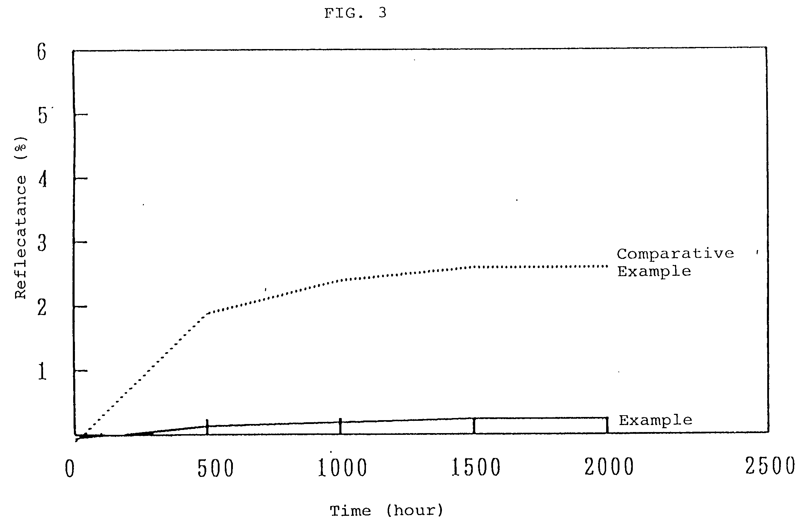

The resulting recording medium was allowed to stand at a temperature of 80°C and a relative humidity of 80% for a prescribed period of time. Then, a laser beam was irradiated onto the medium from the side of the substrate 1 to determine the reflectance. The results are plotted in Fig. 3. It is seen that the medium underwent substantially no change in reflectance with time.

### COMPARATIVE EXAMPLE

A magneto-optical recording medium was obtained in the same manner as in Example 1, except for using a non-etched polycarbonate substrate.

The resulting recording medium was subjected to the same durability test as in Example 1. As shown in Fig. 3, the medium suffered noticeable changes of reflectance after 500 hours reaching about 2%.

As described above, the magneto-optical recording medium according to the present invention suffers substantially no change in reflectance and thus proves highly reliable on long-term use.

While the invention has been described in detail and with reference to specific examples thereof, it will be apparent to one skilled in the art that various changes and modifications can be made therein without departing from the spirit and scope thereof.

A magneto-optical recording medium is disclosed, comprising a substrate having thereon a magneto-optical recording layer, the substrate being a polycarbonate substrate having a surface etched with a gas containing ammonia gas. The magneto-optical recording medium exhibits high reliability on long-term use, suffering substantially no change in reflectance with time.

## Claims

1. A magneto-optical recording medium comprising a substrate having thereon a magneto-optical recording layer, said substrate being a polycarbonate substrate having a surface etched with a gas containing ammonia gas.

2. A magneto-optical recording medium as claimed in Claim 1, wherein said gas containing a nitrogen element is a mixed gas of ammonia gas with an inert gas.

3. A magneto-optical recording medium as claimed in Claim 2, wherein said inert gas is argon.

4. A magneto-optical recording medium as claimed in Claim 1, wherein said gas contains at least 5% by volume of a gas containing ammonia gas.
